# EUROPEAN PATENT APPLICATION

(11) **EP 3 751 062 A1**
(43) Date of publication of application: **16.12.2020**
(21) Application number: 18852774.1
(22) Date of filing: 21.11.2018
(51) Int. Cl.: E03B 7/04, F24D 17/00

(54) **PLUMBING ASSEMBLY AND METHOD FOR OPERATING SAME**

(30) Priority: 07.02.2018 ES 201830103
(71) Applicant: Water Saver, S.L., 28290 Las Rozas Madrid (ES)
(72) Inventor: DEL PALACIO DÍAZ-TEJEIRO, Tristán, 28290 Las Rozas (Madrid) (ES)
(74) Representative: Herrero & Asociados, S.L.
(86) International application number: PCT/ES2018/070751
(87) International publication number: WO 2019/155098

(57) **Abstract**

The invention relates to a plumbing assembly, with a plumbing apparatus, cold and hot water pipes (1, 3) and a water saving device that comprises a hydropneumatic tank (5), a thermostatic valve (6) and a pressure reducing valve (8) wherein the pressure in the hot water pipe (3) is greater than that of the tank (5) and the pressure of the cold water is lower than that of the tank (5).

The invention also relates to an operating method for the plumbing assembly defined, comprising: opening (13) the hot water; the passage (15) of the water through a thermostatic valve (6) with a closure temperature (Tc); if the temperature (T) of the water is lower than that of the closure temperature (Tc), the water is diverted (15) to the tank (5), if the temperature (T) of the water is greater than that of the closure temperature (Tc), the thermostatic valve (6) closes (16) and the water is diverted (17) to the hot water outlet connection (4).

## Description

### Technical field of the invention

The present invention relates to the technical field of potable water installations, specifically to a plumbing assembly that includes hot water and cold water for the operation thereof and features for the user by way of the operation of the same.

### Background of the invention

There is currently a serious problem with regard to the daily use of hot water in all of the conventional potable water installations.

Every time a user needs to obtain hot water from the water supply network, he or she opens the corresponding hot water faucet and must wait for a period of time for the same to come out of the faucet, given that what initially comes out is all of the cold water accumulated in the section of the pipe between the water heater and the faucet to which the water is sent when opened. Thus, it is necessary to leave the accumulated cold water running, and one can see how, inevitably, it is wasted and goes down the drain of the sink while one waits for the hot water to finally arrive.

The amount of water wasted down the drain of the sink while the user waits for the hot water to arrive depends on the size of the pipes and the distance between the faucet that is opened and the water heater, and the amount can range from a few liters to dozens of liters, depending on each case. Considering that these amounts are wasted in all of the faucets of a residence and that this occurs in all residences, we are talking about a highly significant amount of water.

In aiming to solve this problem, the same applicant is the holder of a utility model, with reference number ES 1073773.

In this document, a potable water installation is developed for domestic use which saves water for the hot water demand wherein it has a main line for the entry of water that partially diverts to a water heater, determining for each faucet outlet a direct cold water line from the main line and another hot water line from said water heater.

In this case, the main line has a first pressure reducing valve situated before the diversion that leads to the water heater and a second pressure reducing valve situated after said diversion, such that the pressure of the hot water line is greater than that of the cold water line.

Moreover, it has an expansion tank dimensioned according to the size of the installation, as well as temperature-sensitive valves installed in the hot water line, before each outlet, connected by a return connection to the cold water line. However, the existence of a single expansion tank may be insufficient for a normal installation of a residence, for example in which there are several apparatuses connected to the water supply network.

In this case, although it provides a solution for the problem of the loss of liters of water by a diversion of the hot water in the apparatuses, it has a drawback due to the fact that it is a global installation that uses a single expansion tank to which the hot water lines of all of the apparatuses of the installation are connected. Thus, the water circulation through the pipes results in high pressure losses and, therefore, the pressure of the cold water that is introduced in the expansion tank until the water comes out hot makes it so the pressure difference is not high enough, and as a result the filling of the expansion tank is slow and it takes longer for the hot water to come out of the faucet.

### Description of the invention

The pluming assembly, which includes hot water and cold water for the operation thereof and features for the user that is herein presented is made up of a plumbing apparatus, such as a shower, a bathroom sink, a bath tub, a wash basin, kitchen sink, etc, a pipe for the entry of hot water with a hot water wall connection and a cold water pipe with a cold water wall connection for the connection of said plumbing apparatus and a water saving device.

Said water saving device comprises a hydropneumatic tank that is connected to the hot and cold water wall connections, a thermostatic valve arranged on the hot water pipe, between the hot water wall connection and the hydropneumatic tank and from which a hot water outlet connection emerges, and a pressure reducing valve arranged on the cold water pipe, between the cold water wall connection and the hydropneumatic tank and from which a cold water outlet connection emerges, wherein the pressure in the hot water pipe is greater than the fixed pressure of the hydropneumatic tank and wherein the pressure of the cold water after passing through the pressure reducing valve is lower than the fixed pressure in the hydropneumatic tank.

Said fixed pressure in the hydropneumatic tank may preferably have an approximate value comprised between 2.1 and 2.5 bars, while the pressure of the cold water after passing through the pressure reducing valve can acquire an approximate value also preferably comprised between 2.5 and 2 bars.

According to a preferred embodiment, the pluming assembly comprises a check valve in the connection between the thermostatic valve and the hydropneumatic tank.

According to a preferred embodiment, the hydropneumatic tank comprises a flexible membrane and a pneumatic valve. Said membrane divides the inside of the hydropneumatic tank into two compartments. One of the compartments contains pressurized air and acts as an elastic element that absorbs the variations in volume of the water that enters into the same. Thus, when water enters into one of the compartments of the hydropneumatic tank, the flexible membrane moves and compresses the air of the other compartment, which increases the pressure, thereby pressurizing the water. When allowed for by the installation, the water comes out of the hydropneumatic tank and the membrane recovers the initial form thereof.

According to a preferred embodiment, this plumbing assembly comprises a cover for the thermostatic valve, the pressure reducing valve and the check valve, respectively.

According to a preferred embodiment, the pressure in the hot water pipe has a value that is equal to or greater than twice the fixed pressure in the hydropneumatic tank.

In a preferred embodiment, this hydropneumatic tank is installed inside the wall, in other words embedded in the same and near the plumbing apparatus in question.

In another preferred embodiment, the hydropneumatic tank is installed superimposed on the wall, near the plumbing apparatus in question, installed between the wall and the faucets that make up the plumbing assembly.

This specification, in turn, also proposes an operating method for the plumbing assembly such as the one previously defined.

This method has the following phases:
A first phase of opening the hot water faucet, which initiates the movement of water from the water heater through the hot water wall connection.

A second phase that consists of the passage of the water through a thermostatic valve, wherein the thermostatic valve has a determined closure temperature.

Lastly, a third phase wherein, if the temperature of the water that passes through the thermostatic valve is lower than the closure temperature of the same, the water is diverted through the hot water pipe to a hydropneumatic tank, wherein the pressure inside the hydropneumatic tank has a fixed value, the value of the pressure in the hot water pipe being greater than said fixed value of the hydropneumatic tank.

Likewise, if the temperature of the water that passes through the thermostatic valve is greater than the closure temperature of the same, said thermostatic valve closes and the water is diverted to the hot water outlet connection.

According to a preferred embodiment, the method has additional phases, in the case that the cold water faucet is opened.

In this case it comprises a first phase consisting of said opening of the cold water faucet, which initiates the movement of the cold water from the water distribution network through the cold water wall connection.

A second phase of the passage of cold water through a pressure reducing valve, which reduces the pressure of the cold water to a value that is lower than the value of the fixed pressure in the hydropneumatic tank.

The third phase depends on if there is water accumulated in the hydropneumatic tank or not.

Thus, in the case that there is water accumulated in the hydropneumatic tank, the pressure thereof is greater than that of the water that enters from the water distribution network to the cold water pipe, causing the water accumulated in the hydropneumatic tank to previously exit through the cold water outlet connection, and when said hydropneumatic tank is emptied, the exit of the water that enters from the water distribution network is initiated.

On the other hand, if the hydropneumatic tank is empty, the water that enters the cold water pipe from the distribution network exits through the cold water outlet connection.

With the water saving device in a potable water supply network and the water saving method by means of the same herein proposed, a significant improvement in the state of the art is achieved.

Thus, a device is achieved that is simple and easy to install on the inside of the wall behind each one of the apparatuses connected to the water supply network, such that it is completely hidden from the user.

With this device it is possible to, in a completely mechanical way, divert and accumulate the cold water we do not want to come out, to thereby avoid wasting the same. If this device is not available for use, the water that comes out of the faucet before the hot water arrives is wasted by being allowed to run and go down the drain while waiting for said hot water to come out.

It is a plumbing assembly that is very easy to use, since all the user needs to do is open the faucet in a normal way, just as they would do in any piping network. Thanks to the water saving device it contains, the plumbing assembly prevents the waste of water while waiting for the hot water to arrive and improves the conditions in which it was previously operated, given that by having a plumbing assembly for each one of the plumbing apparatuses, pressure losses are avoided that are caused in the case in which only one centralized hydropneumatic tank is used for the entire installation.

This results in a device and method that are highly efficient for saving water, without involving complicated construction work or elements that aesthetically affect the residence, given that the elements are hidden in the wall, behind the apparatuses connected to the water supply network.

### Brief description of the drawings

For the purpose of helping to make the characteristics of the invention more readily understandable, in accordance with a preferred practical exemplary embodiment thereof, said description is accompanied by a set of drawings constituting an integral part thereof which, by way of illustration and not limitation, represent the following:
Figure 1 shows a perspective view of the plumbing assembly for a preferred embodiment of the invention.
Figure 2 shows a plan view of the plumbing assembly for a preferred embodiment of the invention.
Figure 3 shows a block diagram wherein the operating method of the plumbing assembly, such as that of figures 1 and 2, is shown for a preferred embodiment of the invention.

### Detailed description of a preferred embodiment of the invention

In reference to the figures provided, one can see how in a preferred embodiment of the invention, the pluming assembly, which includes hot water and cold water for the operation thereof and features for the user that is herein proposed is made up of a plumbing apparatus, (shower, bathroom sink, bath tub, wash basin, kitchen sink, etc.), a pipe (3) for the entry of hot water with a hot water wall connection (7) and a cold water pipe (1) with a cold water wall connection (9) for the connection of said plumbing apparatus and a water saving device.

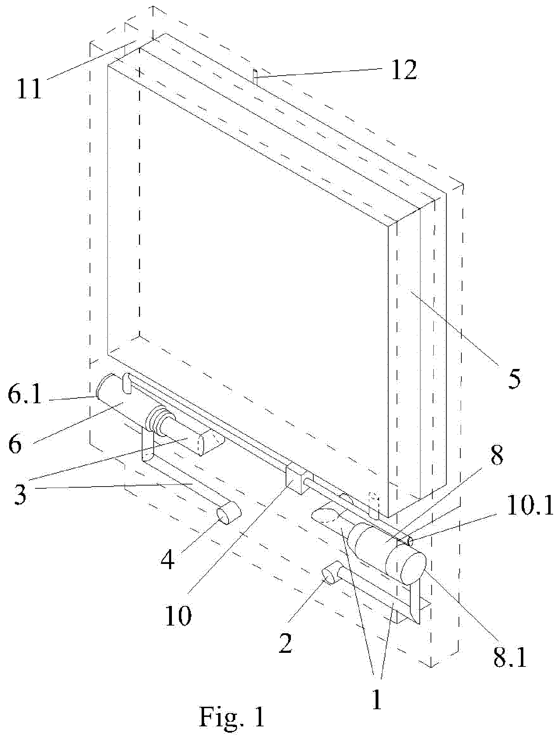

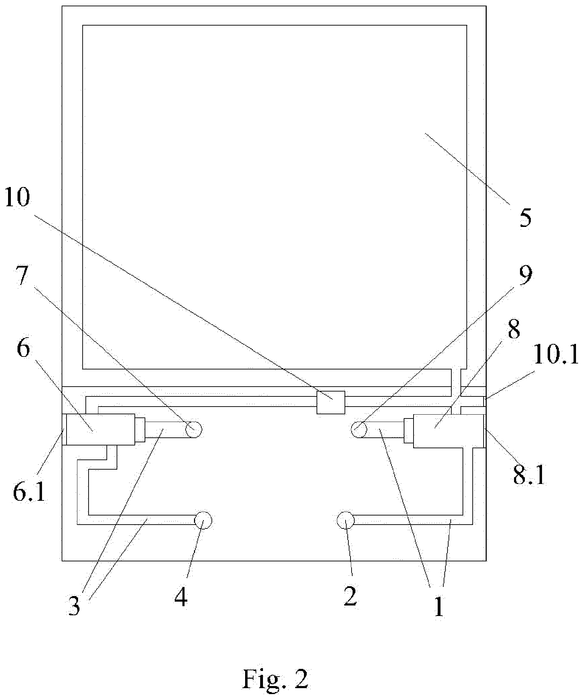

As shown in figures 1 and 2, said water saving device comprises a hydropneumatic tank (5) that is connected to the hot and cold water wall connections (7, 9), a thermostatic valve (6) arranged on the hot water pipe (3), between the hot water wall connection (7) and the hydropneumatic tank (5) and from which a hot water outlet connection (4) emerges, and a pressure reducing valve (8) arranged on the cold water pipe (1), between the cold water wall connection (9) and the hydropneumatic tank (5) and from which a cold water outlet connection (2) emerges.

Figures 1 and 2 show the plumbing assembly for one of the mentioned plumbing devices, which in this embodiment is a shower, but in the rest of the apparatuses it is similar.

In this plumbing assembly, the pressure in the hot water pipe (3) is greater than the fixed pressure of the hydropneumatic (5) tank and the pressure of the cold water after passing through the pressure reducing valve (8) is lower than the fixed pressure of the hydropneumatic tank (5).

This way, given that the pressure of the cold water is lower than the pressure of the hydropneumatic tank (5), if there is water accumulated in said tank (5), given that the pressure thereof is greater than that of the cold water pipe (1), it is the first to exit through the cold water outlet connection (2) when the user opens the corresponding faucet. The moment the hydropneumatic tank (5) is emptied, the exit of the water in the cold water pipe (1) is initiated, directly from the water supply network through the cold water outlet connection (2), without the flow being interrupted in any way.

As shown in figures 1 and 2, in this preferred embodiment of the invention, the plumbing assembly comprises a check valve (10) in the connection between the thermostatic valve (6) and the hydropneumatic tank (5).

On the other hand, in figure 1, one can see that the hydropneumatic tank (5) comprises a flexible membrane (11) and a pneumatic valve (12).

Likewise, this device preferably comprises a cover (6.1, 8.1, 10.1) for the thermostatic valve (6), the pressure reducing valve (8) and the check valve (10), respectively.

The fixed pressure in the hydropneumatic tank (5) in this embodiment and preferably is equal to a value comprised between 2.1 and 2.5 bars, in this case, preferably 2.3 bars.

Likewise, in this preferred embodiment, the pressure of the cold water after passing through the pressure reducing valve (8) is equal to a value comprised between 1.5 and 2 bars, in this case preferably 2 bars.

On the other hand, the pressure in the hot water pipe (3) has a value that is equal to or greater than twice the fixed pressure in the hydropneumatic tank (5), being in this preferred embodiment 4.6 bars.

In turn, the thermostatic valve (6) has a closure temperature (Tc) of the same of 35°C, such that when the hot water faucet is opened, the thermostatic valve (6) is kept open, deviating the hot water flow, which can include an initial amount of cold water stored in the pipe, to the hydropneumatic tank (5), until the water that passes through the thermostatic valve (6) has a temperature (T) greater than 35°C. At that moment, the water that passes through the hot water pipe already exceeds the closure temperature (Tc) of the valve, which means that it is no longer stored cold water, but rather water that comes from the water heater, and therefore the same closes and the water goes to the hot water outlet connection (4) or shower faucet in this case.

The device herein described is installed on the inside of the wall close to the shower.

This specification additionally proposes an operating method for the plumbing assembly such as the one previously defined.

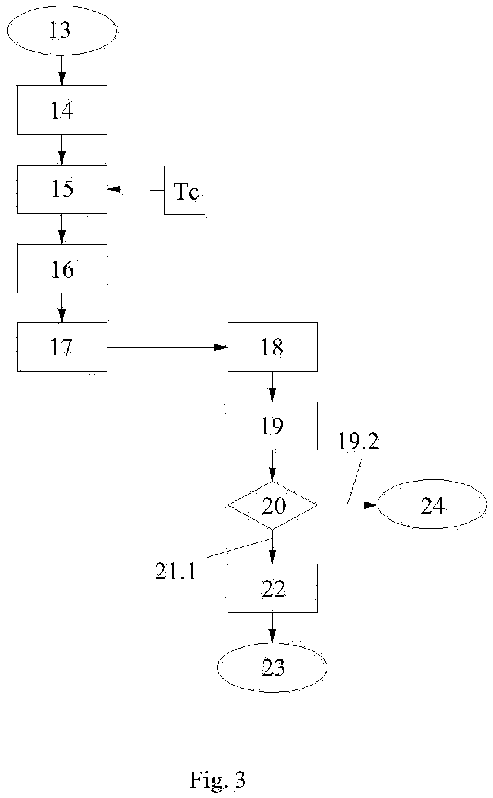

As shown in figure 3, in this preferred embodiment of the invention, the first phase consists of opening (13) the hot water faucet, which initiates the movement (14) of the water from the water heater through the hot water wall connection (7) of the same.

Subsequently, the second phase is the passage (15) of water through a thermostatic valve (6).

The thermostatic valve (6) has a specific closure temperature (Tc), which in this preferred embodiment of the invention is 35°C, which is why the water does not exceed this temperature, and the valve is kept open, allowing the cold water to pass to the tank (5).

Moreover, the pressure inside the hydropneumatic tank (5) has a fixed value, which in this preferred embodiment of the invention is equal to 2.3 bars, the value of the pressure in the hot water pipe (3) being greater than said fixed value of the hydropneumatic tank (5), specifically 4.6 bars.

The third phase of this procedure takes place when the water passes through said thermostatic valve. Thus, if the temperature of the water that passes through the thermostatic valve is lower than the closure temperature (Tc) of the same, the water is moved through the hot water pipe (3) to a hydropneumatic tank (5), wherein the pressure inside the hydropneumatic tank (5) has a fixed value, the value of the pressure in the hot water pipe (3) being greater than said fixed value of the hydropneumatic tank (5).

On the other hand, if the temperature (T) of the water is greater than the closure temperature (Tc) of the same, in other words, a temperature (T) greater than 35°C, at that moment, by exceeding the closure temperature (Tc) of the thermostatic valve (6) the same closes (16) and the water is diverted (17) to the outlet connection (3) of the hot water pipe (3).

In this preferred embodiment of the invention, the method then has an opening phase (18) of the cold water faucet, which initiates the movement (19) of the same from the water distribution network, through the cold water wall connection (9).

In this case, the following phase consists of the passage (20) of cold water through a pressure reducing valve (8), which reduces the pressure of the cold water to a value lower than the value of the fixed pressure in the hydropneumatic tank (5), which since the pressure value in the tank is 2.3 bars, the pressure reducing valve (8) reduces the pressure of the cold water to 2 bars.

The third phase is conditioned on whether or not there is water accumulated in the hydropneumatic tank.

This way, as shown in figure 3, in the case that the hydropneumatic tank (5) does contain (21.1) accumulated water on the inside thereof, the pressure of the same is 2.3 bars, which is why it is greater than the water that enters from the water distribution network to the cold water pipe (1), which due to the passage of the same through the pressure reducing valve (8) is 2 bars.

This causes the water accumulated in the hydropneumatic tank (5) to previously exit (22) through the cold water outlet connection (2), since it has a greater pressure. The exit (23) of the water from the water distribution network is initiated once the hydropneumatic tank (5) is emptied.

On the other hand, in the case that the hydropneumatic tank is empty (21.2), the water that enters the cold water pipe (1) from the distribution network exits (24) directly.

In the case that there is a problem with the hot water and it does not reach the closure temperature (Tc) that causes the closure of the thermostatic valve (6), the hydropneumatic tank (5) fills until reaching a safe level and a safe pressure. At that moment, the order to open the thermostatic valve (6) is sent, causing the exit of water through the hot water pipe (3) to the hot water outlet connection (4), in spite of the fact that it does not reach the closure temperature (Tc) of said valve.

The embodiment described only constitutes an example of the present invention, and therefore the specific details, terms and phrases used in the present specification must not be considered to be limiting, but rather must merely be understood as a basis for the claims and as a representative basis that provides a comprehensible description, as well as sufficient information for a person skilled in the art to apply said invention.

With the water saving device in a potable water supply network and the water saving method by means of the same herein proposed, significant improvements in the state of the art are achieved.

A device is obtained which is very simple to use since the user only has to open the faucet and, at the same time, it is easy to install, since it is installed on an existing water supply network.

The device is likewise economic and does not involve the existence of additional elements that can be seen by the user, given that all of them are hidden on the inside of the wall.

Furthermore, it fulfills the purpose for which it is installed in a highly efficient way, saving a substantial amount of water intended for the demand of hot water, and by being independently installed on each one of the apparatuses of the network, it is possible to repair one of them in the case that it were necessary, without affecting the operation of the rest of them.

On the other hand, since each apparatus has the device thereof and each device has the hydropneumatic tank thereof, there is no problem of a lack of capacity of said tank to collect the cold water diverted to the same. Likewise, given that the pressure of the tank is greater than that of the cold water in the cold water pipe, an initial emptying of the tank is ensured prior to the start of the exit of the water from the network, which is why the emptying of the tank is ensured, in order to have enough volume to receive a new volume of cold water existing in the hot water pipe.

## Claims

1. A plumbing assembly, which includes hot water and cold water for the operation thereof and features for the user, **characterized in that** it is made up of
a) a plumbing apparatus (shower, bathroom sink, bath tub, wash basin, kitchen sink, etc.);
b) a pipe (3) for the entry of hot water with a hot water wall connection (7) and a cold water pipe (1) with a cold water wall connection (9) for connecting to said plumbing apparatus, and;
c) a water saving device which comprises
- a hydropneumatic tank (5), which connects to the hot water and cold water wall connections (7, 9);
- a thermostatic valve (6) arranged on the hot water pipe (3), between the hot water wall connection (7) and the hydropneumatic tank (5) and from which a hot water outlet connection (4) emerges, and;
- a pressure reducing valve (8) arranged on the cold water pipe (1), between the cold water wall connection (9) and the hydropneumatic tank (5) and from which a cold water outlet connection (2) emerges;
- wherein the pressure in the hot water pipe (3) is greater than the fixed pressure of the hydropneumatic (5) tank and wherein the pressure of the cold water after passing through the pressure reducing valve (8) is lower than the fixed pressure in the hydropneumatic tank (5).

2. The plumbing assembly according to claim 1, **characterized in that** the hydropneumatic tank (5) is installed embedded inside the wall.

3. The plumbing assembly according to claim 1, **characterized in that** the hydropneumatic tank (5) is installed between the wall and the faucets that make up the plumbing assembly.

4. The pluming assembly, according to claims 1 to 3, **characterized in that** it comprises a check valve (10) in the connection between the thermostatic valve (6) and the hydropneumatic tank (5).

5. The plumbing assembly, according to any one of the preceding claims, **characterized in that** the hydropneumatic tank (5) comprises a flexible membrane (11) and a pneumatic valve (12).

6. The plumbing assembly, according to any one of the preceding claims, **characterized in that** it comprises a cover (6.1, 8.1, 10.1) for the thermostatic valve (6), the pressure reducing valve (8) and the check valve (10), respectively.

7. The plumbing assembly, according to any of the preceding claims, **characterized in that** the pressure in the hot water pipe (3) has a value that is equal to or greater than twice the fixed pressure in the hydropneumatic tank (5).

8. An operating method for the plumbing assembly as defined in claims 1 to 7, **characterized in that** it comprises
- opening (13) the hot water faucet, which initiates the movement (14) of water from the water heater through the hot water wall connection (7);
- the passage (15) of the water through a thermostatic valve (6), wherein the thermostatic valve (6) has a determined closure temperature (Tc);
- if the temperature (T) of the water that passes through the thermostatic valve (6) is lower than the closure temperature (Tc) of the same, the water is diverted (15) through the hot water pipe (3) to a hydropneumatic tank (5), wherein the pressure inside the hydropneumatic tank (5) has a fixed value, the value of the pressure in the hot water pipe (3) being greater than said fixed value of the hydropneumatic tank (5);
- if the temperature (T) of the water that passes through the thermostatic valve (6) is greater than the closure temperature (Tc) of the same, said thermostatic valve (6) closes (16) and the water is diverted (17) to the hot water outlet connection (4).

9. The operating method for the plumbing assembly according to claim 8, **characterized in that** it comprises
- opening (18) the cold water faucet, which initiates the movement (19) of the cold water from the water distribution network, through the cold water wall connection (9);
- the passage (20) of the cold water through a pressure reducing valve (8), which reduces the pressure of the cold water to a value that is lower than the value of the fixed pressure in the hydropneumatic tank (5);
- if there is water accumulated (21.1) in the hydropneumatic tank (5), the pressure thereof is greater than that of the water that enters from the water distribution network to the cold water pipe (1), such that it causes the previous exit (22) of the water accumulated in the hydropneumatic tank (5) through the cold water outlet connection (2) and when said hydropneumatic tank is emptied, the exit (23) of the water that enters from the water distribution network is initiated.
- if the hydropneumatic tank is empty (21.2), the water that enters the cold water pipe (1) from the distribution network exits (24) through the cold water outlet (2).
